# EUROPEAN PATENT SPECIFICATION

(11) **EP 4 594 592 B1**
(45) Date of publication and mention of the grant of the patent: **16.09.2026**
(21) Application number: 23789340.9
(22) Date of filing: 29.09.2023
(51) Int. Cl.: E06C 1/08, E06C 1/10, E06C 7/50, E04G 7/14, E04G 7/20, E04G 7/22, E04G 7/24, F16B 2/18, F16B 7/04, E06C 7/08

(54) **MODULAR LADDER**
MODULARE LEITER
ÉCHELLE MODULAIRE

(30) Priority: 30.09.2022 GB 202214444
(43) Date of publication of application: 06.08.2025
(73) Proprietor: Moonraker Innovation Ltd, Kirton Ipswich Suffolk IP10 0PP (GB)
(72) Inventor: WILTSHIRE, Andrew James, Suffolk IP10 0PP (GB); KNOX, Stefan, Surrey GU27 2LA (GB); CHEETHAM, Sarah, Surrey GU27 2LA (GB)
(74) Representative: Mathys & Squire
(86) International application number: PCT/GB2023/052522
(87) International publication number: WO 2024/069183

(56) References cited:
- CN-A- 108 756 205
- CN-A- 111 878 490
- CN-U- 216 616 822
- JP-U- S5 671 898
- US-A- 2 755 981
- US-A- 4 086 980

## Description

### Field of the Invention

The present invention relates to a modular ladder. The invention is particularly suitable, but by no means limited, for use by military personnel, emergency personnel (e.g. police officers, firefighters, search and rescue personnel, etc.), mountaineers, and others who may need to climb or traverse obstacles but for whom it is impossible or impractical to carry a conventional ladder about their person.

### Background to the Invention

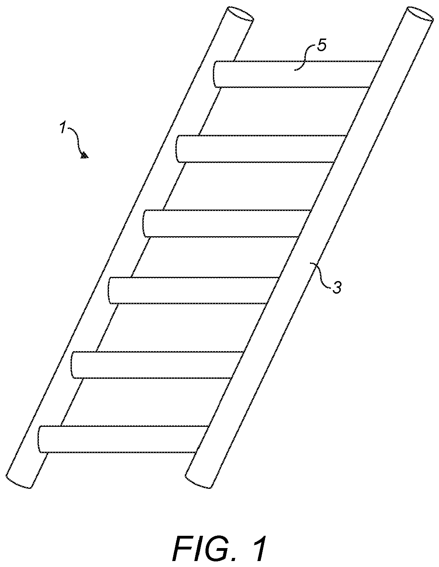

As it will be appreciated, ladders assist in overcoming obstacles by providing one or more rungs which are located in-between, usually perpendicularly and at regular intervals, two sections (sometimes called stiles or stringers), such that a user of the ladder may ascend/descend the rungs as needed to overcome the obstacle (a ladder according to this example is shown in Figure 1).

For instance, in the case of ladder 1 shown in Figure 1, the ladder 1 is positioned against the object to be surmounted, such as a high wall. The user of ladder 1 then steps up rungs 3 of the ladder 1, often holding at least one of the stiles 5 to aid their balance, whilst ascending the ladder 1. Alternatively, ladders may be used to pass other insuperable obstacles, such as crevasses. In this case, the ladder 1 is placed over the crevasse, such that the stiles 5 of the ladder 1 span the crevasse entirely, thereby allowing the user to step across the rungs 3 of the ladder 1 to traverse the crevasse. Whilst the ladder 1 shown in Figure 1 comprises six rungs 3, it will be appreciated that the size of the ladder may include more (or fewer) rungs 3.

The ladders discussed above are of a "rigid" type, being constructed from rigid materials such as wood, metal or even hard plastics and/or other composite materials, with the components being permanently fixed together. Another type of ladder is a "flexible" ladder, as ladders according to this category are often constructed from flexible materials, such as rope or metal wire, to permit the flexible ladder to be rolled-up (although the rungs may still be made of a rigid material).

Rigid ladders are more commonplace than flexible ladders, not least because greater margins of safety are provided by rigid ladders relative to flexible ladders. For example, a rope ladder may degrade due to excessive wear and/or inappropriate storage (e.g., in damp conditions), and may therefore be more likely to fail in use relative to a ladder made from corrosion resistant rigid materials, such as metals/composites. Additionally, flexible ladders generally need to be suspended from the top of an obstacle and allowed to hang down, and therefore are not useful if the user is at the base of an obstacle. Moreover, flexible ladders, by their very nature, flex when in use and are therefore more difficult to use relative to rigid ladders which do not flex (or which flex to a considerably lesser degree relative to flexible ladders) when in use.

However, it will be appreciated that rigid ladders are often more difficult to transport due to their rigid construction, when compared with flexible ladders which may be rolled-up for transportation prior to use. Moreover, rigid ladders are often heavy when compared to flexible ladders, this problem becoming particularly noticeable when fewer people are available to carry the ladder. Furthermore, due to their rigid construction, it is not possible to customise the sizes of stiles and rungs of the ladder as these components are rigidly fixed (e.g., by welding or the like) - this may be disadvantageous in certain circumstances.

In an attempt to distribute weight and reduce storage space, so-called "sectional" ladders are available. Sectional ladders typically comprise two or more preformed sections, each preformed section being formed from two stiles having three rungs. Each preformed section may be connected together to form a ladder suitable for overcoming an obstacle. However, these ladders still suffer from not being particularly portable due to their preformed sectional nature, and often require an intricate mating portion to ensure connection of the preformed sections (and if the intricate mating portion is damaged in any way, the ladder will not be able to be safely assembled).

All of the known ladders described above have disadvantages for military applications (in addition to other applications, e.g. as outlined above), where portability, customisability, and redundancy of ladders is critical, particularly when in a difficult working environment, such as in a theatre of operations.

There is therefore a desire for a modular ladder which addresses at least some of the above problems.

Background art is provided in US 2755981 A, US 4086980 A, JP S5671898 U, CN 216616822 U and CN 108756205 A.

US 2755981 A discloses a discerptible ladder for use on a roof comprising a pair of rigid side members, each of said side members including a plurality of sections, a coupling fixed·to one end of each of said sections, the end of an adjacent section being telescopingly received in said coupling, said coupling and said section having aligned openings, a pin extending through said openings for securing said sections together, transversely extending rungs detachably connected between said side members, said pins extending transversely to said side members and to said rungs, said pins having a transverse opening therein and a fastener extending through said opening.

US 4086980 A discloses a dismantling ladder wherein the rails are made of different sizes with the rungs of a still smaller size so that one rail can be telescoped inside the other and a rung telescoped inside the smaller rail.

JP S5671898 U discloses another example of an assemblable ladder.

CN 216616822 U discloses a scaffold connecting device with an early warning function. The scaffold connecting device with the early warning function comprises a supporting structure, the supporting structure comprises a transfer device, the transfer device comprises a supporting block, first limiting rings are fixedly connected to the periphery of the supporting block, and a through hole is formed in the middle of the supporting block; the outer surface of the supporting block on the front side and the rear side of the limiting ring is fixedly connected with a buckle device, the buckle device comprises a limiting hinge, the limiting hinge is hinged to a rectangular plate, and the upper end, away from the limiting hinge, of the rectangular plate is fixedly connected with a connecting plate.

CN 108756205 A discloses a support joint connection device and an installation method thereof. The support joint connection comprises a vertical steel sleeve and four horizontal steel sleeves, wherein the horizontal steel sleeves are distributed in a crossed mode and welded to the vertical steel sleeve in an orthogonal mode, and rod pieces are arranged in the horizontal steel sleeves and the vertical steel sleeve in an inserted mode.

### Summary of the Invention

The present invention is set out in the appended independent claim.

. Optional features are set out in the appended dependent claims.

According to a first example, a joint for connecting structural members to form a modular ladder is disclosed, the joint comprising first, second and third receiving portions, wherein: the first and third receiving portions project along a first axis; the second receiving portion projects along a second axis perpendicular to the first axis; the first receiving portion comprises a first void for receiving a first structural member, and a first securing means for securing the first structural member in the first void; the second receiving portion comprises a second void for receiving a second structural member, and a second securing means for securing the second structural member in the second void; and the third receiving portion comprises a third void for receiving a third structural member, and a third securing means for securing the third structural member in the third void, wherein each securing means comprises a quick-release buckle; and wherein each securing means further comprises a deformable collar interposed between the quick-release buckle and its respective receiving portion. Beneficially, such a joint facilitates the rapid assembly/disassembly of structural members to assemble/disassemble a modular ladder of various sizes. Advantageously, the deformable collar acts to evenly distribute a locking force across a structural member when in use, thereby improving the grip exerted on the structural member.

Optionally, each of the first, second and third receiving portions may be integrally formed within the joint. Alternatively, or in addition, the second receiving portion may extend between the first and third receiving portions.

Alternatively or instead the receiving portion may comprise at least one notch formed about its periphery, to allow compression of the receiving portion upon fastening of the respective securing means.

Optionally, to promote rotational alignment of the structural members and joints, each receiving portion may comprise at least one longitudinal internal surface protrusion or recess formed along each respective void.

The quick-release buckle may comprise: a first securing portion; a second securing portion; and a fastener having a handle, the fastener fastening the first and second securing portions together; wherein the handle is movable between first and second positions; wherein when the handle is in the first position the first and second securing portions are spaced apart; and wherein when the handle is in the second position the first and second securing portions are brought together.

Optionally, the securing means may be affixed to the receiving portions with adhesive, by spot-welding, or by an interference fit.

Optionally, each receiving portion may comprise a recessed shoulder portion for receiving the respective securing means.

Optionally, the collar may further comprise a first aperture or recess, wherein the handle of the quick-release buckle further comprises a protrusion and a second aperture, and wherein the protrusion is configured to engage with the first aperture or recess and the second aperture when the handle is in the second position. Optionally, the collar may further comprise an annular rim against which the quick-release buckle abuts.

In certain embodiments, instead of each receiving portion comprising at least one notch formed about its periphery to allow compression of the receiving portion upon fastening of the respective securing means, the first, second and third receiving portions of the joint may instead comprise a respective longitudinal slot for receiving a corresponding pin on the outer surface of a structural member in use. Optionally, each quick-release buckle of the joint may be rotatable about its respective axis to lock the pin of the structural member in use. Beneficially, such a twist-lock mechanism prevents inadvertent disassembly of the modular ladder.

Optionally, the first and/or second securing portions of the quick-release buckle may comprise a surface defining a shoulder against which the pin of the structural member is entrapped when quick-release buckle is rotated in use. Optionally the deformable collar may comprise a longitudinal slit through which the pin on the outer surface of the structural member can pass.

Optionally, in the case where the securing means further comprises a deformable collar interposed between the quick-release buckle and its respective receiving portion, the joint may further comprise a housing for securing the respective collars to the joint. Optionally, the housing may further comprise a recess aligned with the longitudinal slot, into which recess the pin of the structural member is entrapped in use.

Preferably, the joint may be formed from a corrosion resistant rigid material.

According to another example, a kit for forming a modular ladder is disclosed, the kit comprising: a plurality of structural members; and a plurality of joints according to any of the examples above. Advantageously, by providing a modular ladder in kit form, a high degree of customisation of the size of the modular ladder can be achieved, as well as resiliency in the case of broken structural members/joints. Optionally, each structural member may comprise a pin (or other locating means) for guiding the structural member into a respective receiving portion.

Optionally, in a case where each receiving portion of the joint comprises at least one longitudinal internal surface protrusion or recess formed along each respective void, each structural member of the kit may comprise a complementary longitudinal surface protrusion or recess formed along the structural member.

Optionally, each structural member may comprise at least a textured surface portion to provide grip.

Optionally, the structural members and joints may have a circular cross section.

Preferably, the rungs and stiles of the kit may be formed from a corrosion resistant rigid material.

The structural members may be first structural members (e.g. rungs) and second structural members (e.g. stiles); wherein the first structural members are of an equal length relative to the second structural members; or wherein the first structural members are of an unequal length relative to the second structural members. Beneficially, the kit according to this option provides a modular ladder capable of being customised to a size appropriate for overcoming a given obstacle.

Optionally, each of the first structural members (e.g. rungs) may comprise a flat portion to aid the user's ability to stand on or climb the ladder.

According to a further example, a modular ladder is disclosed, the modular ladder comprising a plurality of structural members connected by a plurality of joints according to any of the above examples, or formed from the above kit.

Each feature disclosed in this specification (which term includes the claims) and/or shown in the drawings may be incorporated in the invention independently (or in combination with) any other disclosed and/or illustrated features. In particular but without limitation the features of any of the claims dependent from a particular independent claim may be introduced into that independent claim in any combination or individually.

### Brief Description of the Drawings

The invention will now be described by way of example only with reference to the attached figures in which:
Figure 1 is a simplified schematic of a ladder known in the art;
Figure 2a is a schematic perspective view of a modular ladder formed of a plurality of structural members connected using a plurality of releasable joints;
Figure 2b is schematic perspective view of a joint as shown in Figure 2a, including first, second and third securing means for securing the joint;
Figure 2c is a schematic perspective view of one of the securing means of Figure 2b;
Figure 3 is a cross-section of the joint of Figure 2b with the securing means omitted and showing the presence of notches at the periphery of the joint;
Figure 4a is a schematic plan view of the joint of Figure 2b as in use;
Figures 4b, 4c and 4d are further views of the joint of Figure 4a as in use;
Figure 5 is a schematic perspective view of a modular ladder;
Figure 6 a schematic perspective view of a modular ladder having flat portions on the rungs which enable the ladder to serve as a portable bridge;
Figure 7a is schematic perspective view of a collar for a further example of a joint of a modular ladder;
Figure 7b is schematic perspective view of the collar illustrated in Figure 7a inserted into a quick-release buckle for a joint of a modular ladder;
Figure 7c is a schematic perspective view of one half of a housing for securing the collar of Figure 7a to a joint of a modular ladder;
Figure 8a is a schematic perspective view showing the partial housing of Figure 7c fitted around a joint of a modular ladder;
Figure 8b illustrates the joint shown in Figure 8a including first, second and third securing means for securing the joint, wherein each securing means comprises a collar and a quick-release buckle (as shown in Figure 7b);
Figure 9a illustrates the joint shown in Figure 8b having collars partially secured by the housing shown in Figure 7c;
Figure 9b illustrates the joint shown in Figure 9a having collars fully secured by the other half of the housing;
Figure 10a illustrates a structural member having a pin;
Figure 10b is a schematic perspective view of a joint of the kind shown in Figure 9b in an open position for receiving structural members having a pin;
Figure 10c is a schematic perspective view of a securing means of the joint of Figure 10b in an open position having received a structural member having a pin;
Figure 11a is a schematic perspective view of two securing means of the joint of Figure 9b, each shown in an open position having received a respective structural member, and the securing means having subsequently been rotated about an axis to entrap the pin of the respective structural member;
Figure 11b is an obverse schematic perspective view of Figure 11a, showing a handle of a quick-release buckle having a protrusion and a recess for receiving the protrusion so as to lock the handle in a closed position;
Figure 12 is a schematic perspective illustration of the joint of Figure 9b in a locked position having received respective structural members; and
Figure 13 is a close-up schematic perspective illustration of one of the securing means of Figure 12.

In the figures, like elements are indicated by like reference numerals throughout.

### Detailed Description of Preferred Embodiments

The present embodiments represent the best ways known to the Applicant of putting the invention into practice. However, they are not the only ways in which this can be achieved.

### Modular Ladder

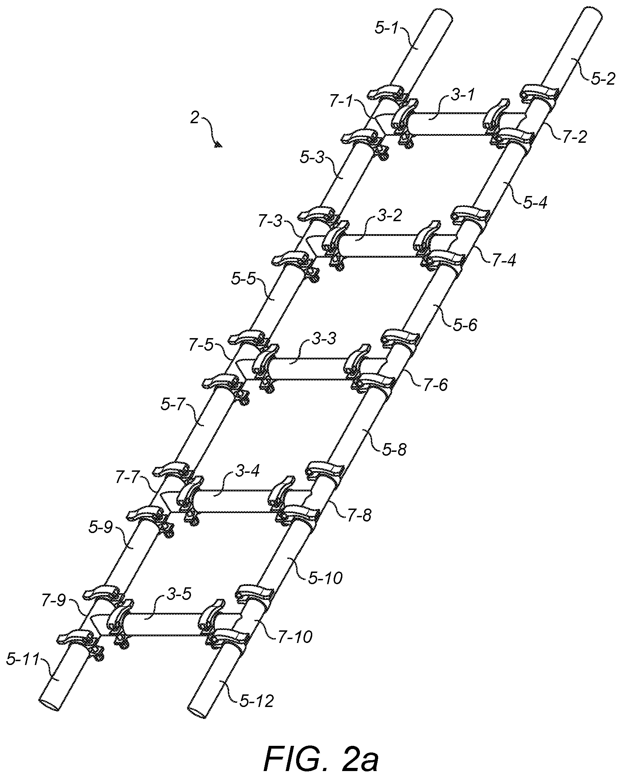

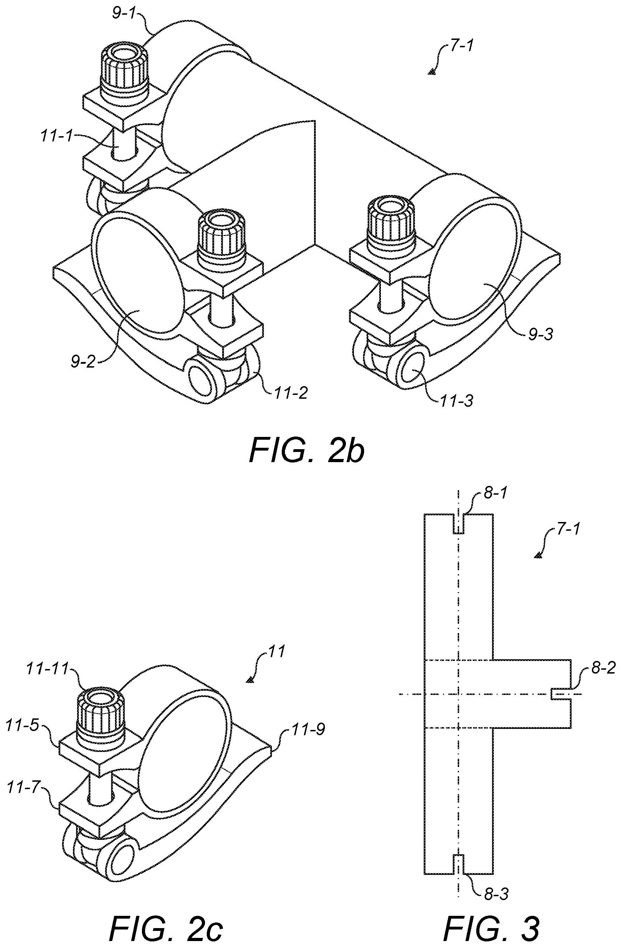

A modular ladder embodying the present invention will now be described in overview by way of example only with reference to Figures 2a, 2b and 2c.

As shown in Figure 2a, the modular ladder 2 shares rungs 3 and stiles 5 in common with the conventional ladders described above with reference to Figure 1. However, according to the example illustrated in Figure 2a, the rungs 3 and stiles 5 are formed as discrete structural members which are joined together with joints 7 during the assembly of the ladder by a user (as discussed in detail below). Accordingly, it will be appreciated that the modular ladder 2 may be provided as a kit of parts comprising a plurality of rungs 3, stiles 5, and joints 7. Such a kit may be carried by the user in a backpack or the like, to enable the ladder 2 to be assembled as and when required.

The rungs 3 and stiles 5 may be formed from hollow tubes manufactured from corrosion resistant rigid materials (e.g. lightweight alloys/metals/polymers/composites), and the joints 7 may be manufactured from similar materials, although it will be appreciated that the kit of parts may be manufactured from any material(s) suitable for bearing the load of a user when the ladder 2 is in use. Also, rungs 3 and stiles 5 may be provided as tubes of any length, including of equal lengths, depending on the needs of a given operational environment. For instance, longer lengths of stiles 5 may be needed if the modular ladder 2 is expected to be used in mountainous/glacial environments, as the ladder 2 may need to span gaps of unpredictable sizes formed by large crevasses, whereas in urban environments stiles 5 of shorter lengths may be more appropriate to scale smaller obstacles with semi-standardised heights, such as two-story buildings, access walls, or the like.

It may also be beneficial to use shorter sections of stiles 5 if the ladder 2 were to be used as a "fire-step". "Fire-steps" are often integrally formed as part of a trench, in a raised position relative to the base of the trench, and are used as a means for soldiers to briefly stand to allow them to observe or fire towards an enemy. Soldiers may then step off the fire-step as required, e.g. to seek cover from returning fire. However, the heights of fire-steps formed in trenches are often not suitable for certain personnel, e.g. they may unduly expose tall soldiers when in use. Accordingly, the length-customisable modular ladder 2 may be used in place of a traditional "fire-step" to alleviate these problems.

Reference is now made to Figure 2b, which illustrates, in expanded view, joint 7-1 of Figure 2a (with the rung 3-1 and stiles 5-1 and 5-3 not attached).

As illustrated, joint 7-1 is a "T-piece" joint (which may also be referred to as a T-connector, connector, coupling or the like) having three receiving portions 9. Each of the receiving portions 9 defines a void mutually sized for receiving a structural member (i.e. rung or stile part) 3, 5 of the modular ladder 2 during the ladder assembly process. For instance, a first receiving portion 9-1 is for receiving stile part 5-1 and a third receiving portion 9-3 is for receiving stile part 5-3, whereas a second receiving portion 9-2 is for receiving rung 3-1.

To secure these structural members 3, 5 each of the receiving portions 9 comprises a means for securing 11 the structural member (e.g. rung 3-1 and stiles 5-1 and 5-3 discussed above) to a respective receiving portion 9, the means for securing 11 being located at or near the periphery of the receiving portion 9.

According to the example illustrated in Figure 2c, the securing means 11 take the form of a quick-release buckle 11 (e.g. a type of releasable clamp/collar) located at or near the periphery of each receiving portion 9. As illustrated, the securing means 11 according to this example comprises an arcuate first securing portion 11-5 opposingly facing an arcuate second securing portion 11-7, the first and second securing portions being formed in substantially the same cross sectional shape with respect to the cross-section of the joint 7 onto which they are mounted (i.e., in this example, the first and second securing portions together have a substantially circular cross-section, to complement the substantially circular cross-section of j oint 7).

The securing portions 11-5, 11-7 are mutually coupled via a fastener 11-11 which fastens the two securing portions together. The fastener (such as a threaded bolt) is terminated at one end by a handle 11-9, which is movable between first and second (open and closed) positions by means of a camming action. When the handle 11-9 is in the first (open) position, the securing portions 11-5, 11-7 are spaced apart, such that the securing portions do not provide a fastening function. Conversely, when the handle 11-9 is moved into the second (closed) position as illustrated in Figure 2c, the securing portions 11-5, 11-7 are brought together, providing a fastening function in use.

When the handle 11-9 of the securing means 11 is in the open position (i.e. the securing means 11 is in an untightened/open state) the size of the receiving portion 9 about which the securing means 11 is located is unconstricted, thereby allowing straightforward insertion/removal of a respective structural member 3-1, 5-1, 5-3 into/out of the receiving portion 9 when the modular ladder 2 is being assembled/disassembled. Conversely, when the handle 11-9 of the securing means 11 is in the closed position (i.e. the securing means 11 is in a tightened/closed state) the size of the receiving portion 9 about which the securing means 11 is located is constricted, thereby securing a respective structural member 3-1, 5-1, 5-3 into the receiving portion 9 when the modular ladder 2 is being assembled.

Advantageously, a quick-release buckle 11 as described above may be rapidly opened and closed without the use of tools or other equipment, thereby facilitating straightforward assembly/disassembly of the ladder 2 by the user.

It should be appreciated that the securing means 11 may be affixed to the periphery of each of the receiving portions 9 by spot-welding, adhesive, an interference fit, or by any other suitable method for affixing. Moreover, each of the receiving portions 9 may be configured to include a recessed shoulder portion onto which the respective securing means 11 may be mounted.

Referring now to Figure 3, to facilitate the restriction/derestriction in size of each of the receiving portions 9, one or more notches 8 may optionally be provided about the periphery of each of the receiving portions which compress, by means of the above-described securing means 11, to reduce the size of the inlet of the receiving portion 9 when securing a respective structural member 3-1, 5-1, 5-3 inside the joint 7.

### Method for Assembling a Modular Ladder

The assembly of the modular ladder 2 of Figure 2a will now be explained in more detail.

During assembly, the user may first install a rung 3-1 into the second receiving portion 9-2 of joint 7-1, and secure the rung 3-1 in place by closing the second securing means 11. Then, the user may repeat this process with respect to stiles 5-1 and 5-3, by respective insertion and securing of these stiles into the first and third receiving portions 9-1 and 9-3.

By installing and securing rung 3-1 first, the rung 3-1 extends between the first and third receiving portions, such that stiles 5-1 and 5-3 abut the rung 3-1 when fully inserted into their respective receiving portions 9-1 and 9-3, beneficially resulting in a lower leveraging force being applied across the rung 3-1 and its receiving portion 9-2 when the modular ladder 2 is in use.

Alternatively, it should be appreciated that the joint 7 may instead be integrally preformed, such that each receiving portion 9 of joint 7 defines a respective internal void having a defined seat against which a respective component, i.e., a rung 3 or a stile 5, abuts once fully inserted into the receiving portion 9. Preferably, the internal void of receiving portion 9-2 extends between the internal voids of receiving portions 9-1, 9-3. According to this alternative, structural members 3 and 5 can be inserted into joints 7 in any order, with the internal voids being configured to cause the rung 3-1 to be supported between the stiles 5-1 and 5-3, thereby providing the same structural benefit as described in the paragraph above.

This process of inserting structural members 3 and 5 into the respective receiving portions 9 of joints 7, and securing the components in place via the securing means 11 located at each receiving portion 9, is repeated until a modular ladder 2 of sufficient size to overcome a given obstacle is assembled.

For instance, stiles 5-2 and 5-4 are inserted and secured into joint 7-2, and then the receiving portion of joint 7-2 is offered up to rung 3-1 (which is already securely fitted to joint 7-1, along with stiles 5-1 and 5-3) and rung 3-1 is secured inside joint 7-2, with stiles 5-2 and 5-4 being parallel to stiles 5-1 and 5-3. Accordingly, an "H-piece" is formed, comprising stiles 5-1, 5-3, 5-2 and 5-4, rung 3-1 and joints 7-1 and 7-2. A modular ladder 2 having only one rung 3-1 will normally not be sufficient to traverse an obstacle, and hence the procedure of adding further rungs 3, stiles 5 and joints 7 to the "H-piece" is then continued to assemble a ladder of a suitable size. For instance, in the example illustrated in Figure 2a, the ladder 2 comprises rungs 3-1, 3-2, 3-3, 3-4, 3-5, stiles 5-1, 5-2, 5-3, 5-4, 5-5, 5-6, 5-7, 5-8, 5-9, 5-10, 5-11, 5-12, and joints 7-1, 7-2, 7-3, 7-4, 7-5, 7-6, 7-7, 7-8, 7-9 and 7-10.

Advantageously, therefore, the present modular ladder 2 is highly customisable, and can be assembled to various sizes by use of as many rungs 3, stiles 5 and joints 7 as needed, depending on the size of the obstacle to be scaled/traversed. Further beneficially, the modular ladder 2 may be assembled/disassembled rapidly due to the procedurally straightforward assembly/disassembly process, which may be of critical importance in difficult conditions, such as in theatres of operation.

Another advantage of the present modular ladder 2 is that the structural members of such a modular ladder 2, i.e. rungs 3, stiles 5, as well as joints 7, can be distributed over several personnel, and may be stowed for instance in backpacks or the like, meaning the modular ladder 2 can be transported more effectively and with considerably less encumbrance than traditional rigid ladders. Again, such flexibility of transport may be of significant utility in challenging operational environments.

Moreover, the present modular ladder benefits from additional resilience provided by the redundancy of being formed from a kit of parts. For instance, if a rung 3 or a stile 5 of modular ladder 2 breaks, then another rung 3 or another stile 5 may be used in its place (and when rungs 3 and stiles 5 forming the kit of part are of equal size, they may beneficially be used interchangeably). This is in contrast to conventional ladders, which would typically be rendered unusable if a single rung or stile were to break. If such a breakage were to arise in a critical operating environment using such conventional ladders, the consequences of not having a usable ladder could be disastrous, and hence it will be appreciated that the modular ladder 2 according to the present invention is particularly advantageous in such environments (amongst others).

### Joint for a Modular Ladder

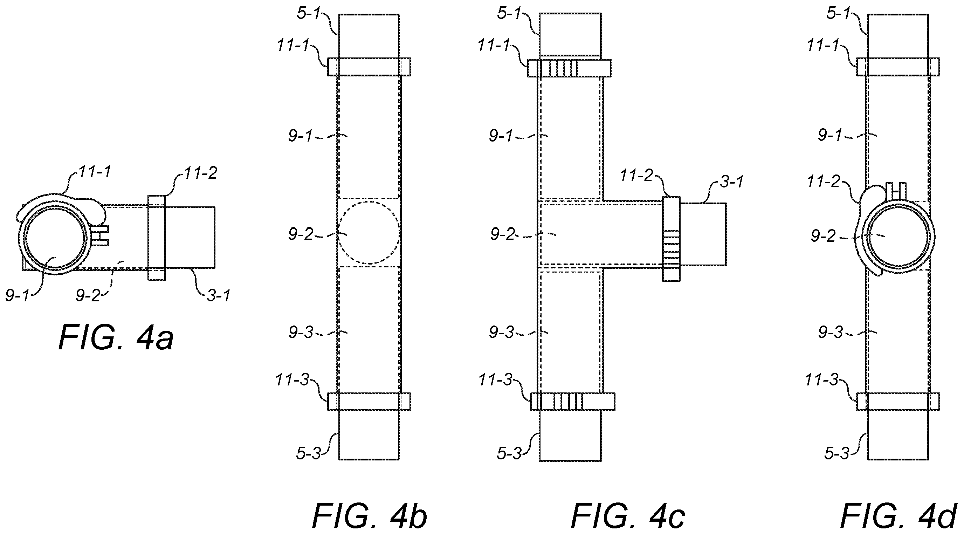

To provide further detail in respect of the internal configuration of the joints 7, reference is now made to Figures 4a to 4d which show, in cutaway view from several different perspectives, structural members 3-1, 5-1, 5-3 securely fastened into the receiving portions 9 of the joint 7-1 shown in Figures 2a and 2b.

Figure 4a is a plan view of the joint 7-1 and, as illustrated, rung 3-1 is inserted into the void formed by receiving portion 9-2 and secured in place by securing means 11-2. Similarly, stile 5-1 (which projects out of the page towards the reader) is inserted into the void formed by receiving portion 9-1 and secured in place by securing means 11-1.

Figures 4b and 4c are side views of the joint 7-1, shown from two different perspectives (using common reference signs, as appropriate). As illustrated in Figure 4b, rung 3-1 projects away from the page from the reader's perspective, whereas in Figure 4c rung 3-1 is shown in a side profile of the joint 7-1. In both Figures 4b and 4c the receiving portion 9-2 into which the rung 3-1 is inserted is shown, with Figure 4c illustrating securing means 11-2 securing rung 3-1 into the void of the receiving portion 9-2. It can also be seen that receiving portion 9-2 is formed and extends between the first and third receiving portions 9-1, 9-3.

The voids formed by receiving portions 9-1 and 9-3 are both illustrated in Figures 4b and 4c, and have respectively received stiles 5-1 and 5-3. Securing means 11-1 and 11-3 respectively secures stiles 5-1, 5-3 in place.

As is also illustrated in Figures 4b and 4c, stiles 5-1 and 5-3 may abut directly against the rung 3-1, or may alternatively abut against a preformed abutment portion of the void formed by the receiving portion 9-2. The former example has the advantage of the j oint 7 being more procedurally straightforward to manufacture, whereas the latter example has the advantage of the assembly of the modular ladder 2 being more straightforward as the structural members 3, 5 can be inserted into joints 7 in any order.

Figure 4c also illustrates two axes, as indicated by dotted lines. The first and third receiving portions 9-1, 9-3 project along a first axis, and the second receiving portion 9-2 projects along a second axis, the second axis being substantially perpendicular to the first axis.

Beneficially, according to this arrangement, the leveraging forces that would otherwise occur in use at the right-angled portions of the oint 7 (i.e. the portions respectively formed between receiving portions 9-1 and 9-2 and between receiving portions 9-2 and 9-3) if the second receiving portion did not extend between the first and third receiving portions are reduced, as in this arrangement the forces acting on rungs 3 when the modular ladder 2 is in use are transmitted down the entire length of the first axis (rather than via the above-mentioned right-angled portions), i.e. through the stiles 5.

Finally, Figure 4d shows the joint 7 of Figure 4c rotated clockwise by 90 degrees about the first axis, such that the receiving portion 9-2, and hence that of the second axis, projects out of the page toward the reader.

### Rotationally Aligned Modular Ladder

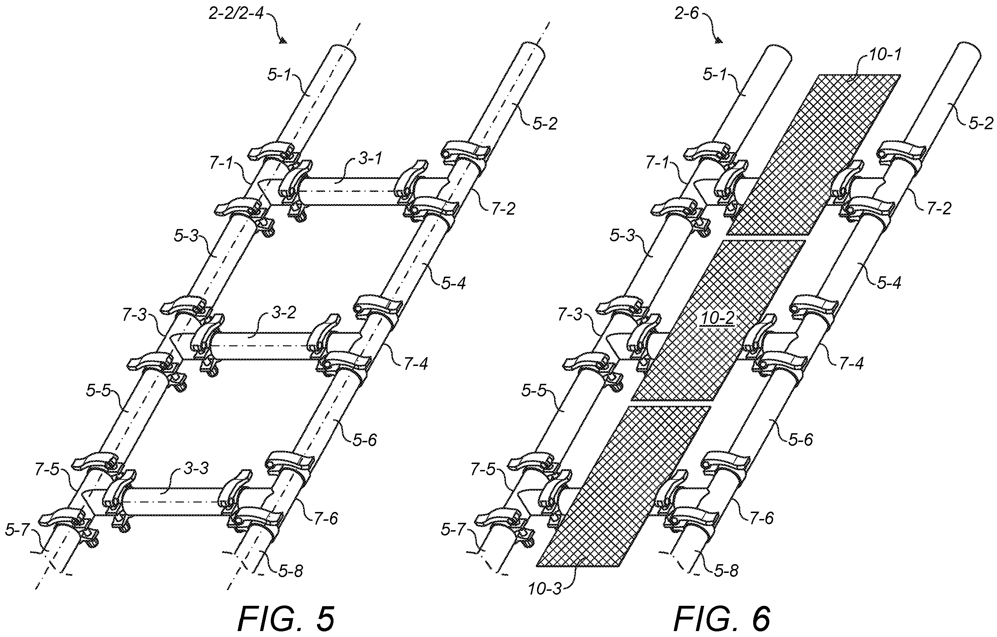

According to another example of the invention, a rotationally aligned modular ladder 2-2 may be provided, as illustrated with reference to Figure 5.

The modular ladder 2-2 of this example shares the features of the above-described modular ladder 2 (which will not be repeated again here), in addition to a longitudinal alignment indication which is provided on each of the rungs 3 and the stiles 5 (illustrated by dotted lines in Figure 5). Additionally, each of the receiving portions 9 of joints 7 comprise a corresponding longitudinal alignment indication (not shown) with which the alignment indications of each rung 3 and stile 5 are intended to mutually align, prior to being secured by securing means 11. By assembling the modular ladder 2-2 in this way, all structural members 3, 5 will be rotationally aligned with joints 7 via the indications, thereby ameliorating potential alignment issues during the assembly of modular ladder 2-2.

Alternatively, a modular ladder 2-4 according to another example also shares the features of the above-described modular ladder 2 (which will not be repeated again here), in addition to a longitudinal protrusion which is provided on each of the rungs 3 and stiles 5 (illustrated by dotted lines in Figure 5). In this example, each of the receiving portions 9 of joints 7 comprises a corresponding longitudinal internal recess (not shown) into which the protrusion of each rung 3 and stile 5 are inserted, prior to being secured by securing means 11. Beneficially, therefore, during the assembly of the modular ladder 2-4 according to this example, there is no rotational freedom about any of the rungs 3, stiles 5 or joints 7 once a rung 3 or a stile 5 has been inserted into a receiving portion 9 of joint 7. Such a configuration of components 3, 5, 7 may therefore assist in rapid assembly of the modular ladder 2-4 in challenging conditions (e.g. wet/slippery conditions), as well as ensuring rotational alignment of the various components of the ladder 2-4.

Conversely, the longitudinal protrusion may instead be provided on the interior of each of the receiving portions 9 of the joints 7, and each of the rungs 3 and the stiles 5 may instead comprise the longitudinal recess along their surfaces.

### Structural Members

Whilst the joints 7 and associated rungs 3 and stiles 5 have been illustrated as having substantially circular cross sections in the examples of Figures 2 to 5, these structural members 3, 5 and joints 7 may instead have alternative cross sections.

For instance, triangular, rectangular, square, pentagonal, hexagonal, etc. cross-sections, or a mix thereof, may be used. Beneficially, use of structural members having these alternative configurations negates the need for rotational alignment guides as described in the example of Figure 5 with reference to modular ladder 2-4, as the above-described alternative configurations naturally restrict rotation about joints 7 when structural members 3, 5 are inserted into the joints 7.

Moreover, rungs 3 may comprise a portion having a flat surface adapted for standing on when the ladder is in use. For instance, having flat portion to stand on when in use, rather than a cylindrical portion as illustrated in the examples of Figures 2 to 5, makes ascending and descending the ladder more procedurally straightforward - though, of course, it will be appreciated that the above-described alternative cross-sections naturally comprise a flat portion which can be stepped on when the ladder is in use.

Furthermore, stiles 5 may also be provided with a portion having a flat surface. In this example, during assembly the flat portions of rungs 3 and of stiles 5 may be arranged in a mutually coplanar fashion, such that the ladder formed in this example creates a flat platform which may be used as a portable bridge (the surface of the bridge being formed by the flat surfaces of the rungs 3 and the flat surfaces of the stiles 5). Alternatively, and as illustrated in Figure 6, only the rungs may be provided with flat portions 10, which span between consecutive rungs of the ladder 2-6 when oriented such that the flat portions 10 lie in the plane of the ladder between the stiles 5. In such a manner, a portable bridge may again be assembled.

### Further Example Employing a Twist-Lock Mechanism

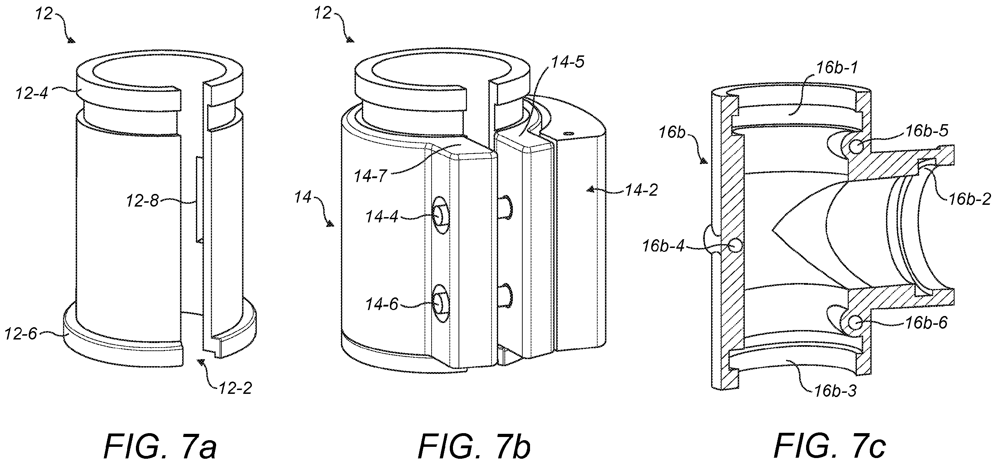

Another example of a modular ladder will now be described with reference to Figures 7 to 13. It will, however, be appreciated that much of the foregoing description and the principles described therein are also applicable to this further example.

Reference will first be made to Figures 7a, 7b and 7c, which respectively show a resiliently (i.e. reversibly/elastically) deformable (i.e. flexible) collar 12, a quick-release buckle 14 (which may be alternatively be termed a "clamp assembly") having the collar 12 placed therein, and a first half of a housing 16b.

As illustrated in Figure 7a, the collar 12 has a longitudinal slit 12-2, an annular portion 12-4 for securing the collar 12, an annular rim 12-6 against which the quick-release buckle 14 is seated (e.g. by abutting a portion of the quick-release buckle 14 against annular rim 12-6), and an aperture or recess 12-8. In the illustrated example, the respective outer diameter of the quick-release buckle 14 and the annular rim 12-6 are substantially the same. The collar 12 may be manufactured from nylon, polypropylene, polyoxymethylene (POM), or of another suitable material.

The quick-release buckle 14, according to the example illustrated in Figure 7b, is a type of releasable clamp/collar, and when in use is located at or near the periphery of a joint's receiving portion, with collar 12 being interposed between the joint's receiving portion and the quick-release buckle 14 (and hence the collar 12 and the quick-release buckle 14 mutually cooperate to function as a securing means). As illustrated, the securing means according to this example comprises an arcuate first securing portion 14-5 opposingly facing an arcuate second securing portion 14-7, the first and second securing portions being formed in substantially the same cross sectional shape with respect to the cross-section of the joint onto which they are mounted (i.e., in this example, the quick-release buckle 14 has a substantially circular cross-section, to complement the substantially circular cross-section of the joint onto which it is to be mounted).

The quick-release buckle 14 is coupled via fasteners 14-4, 14-6. The fasteners (such as threaded bolts) are terminated at one end by a handle 14-2, which is movable between first and second (open and closed) positions by means of a camming action. When the handle 14-2 is in the first (open) position (not illustrated), the quick-release buckle 14 adopts a spaced apart configuration and does not provide a fastening function. Conversely, when the handle 14-2 is moved into the second (closed) position as illustrated in Figure 7b, the quick-release buckle's diameter is reduced, thereby providing a fastening function in use. Whist two fasteners 14-4, 14-6 are illustrated, it will be appreciated that the quick-release buckle 14 may instead have one fastener, or may have three or more fasteners. The quick release buckle 14 may be cast (or moulded) in aluminium, or in another suitable metal/alloy/composite.

As illustrated in Figure 7c, the first half of a housing 16b (described in more detail later) has a "T-shaped" configuration, with the terminating ends of the T having annular recessed portions or grooves 16b-1, 16b-2, 16b-3 which are configured to receive a corresponding annular portion 12-4 of a respective collar 12. The housing 16b may also comprise openings 16b-4, 16b-5, 16b-6 for receiving a respective securing fastener, such as a screw (as described below). The housing 16b may be manufactured from glass reinforced nylon, or from another suitable material.

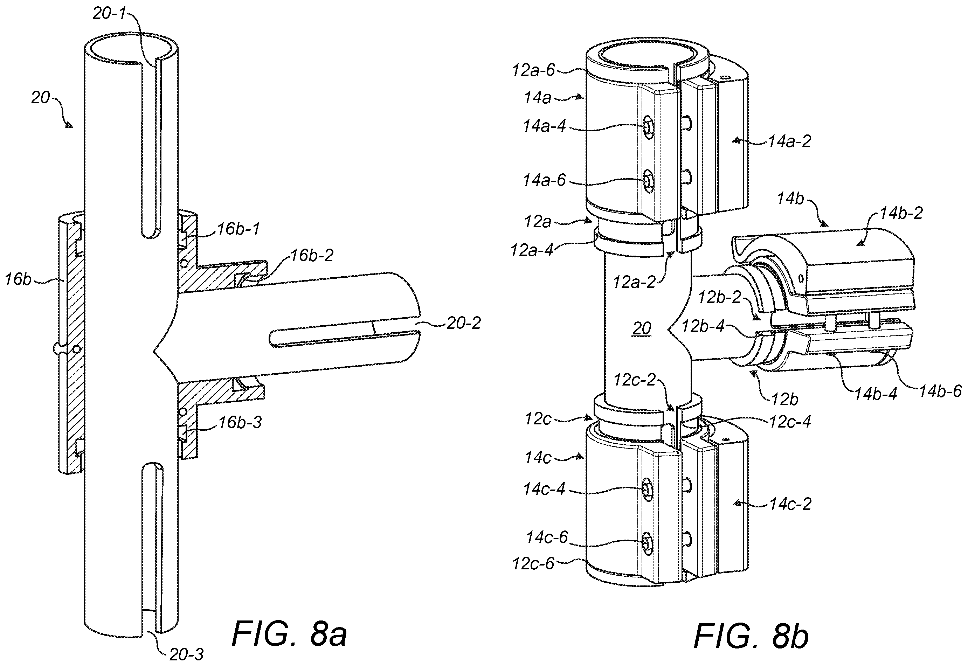

Reference is now made to Figure 8a, which shows a joint 20 for use in the assembly of a modular ladder. As illustrated, the joint 20 comprises a first receiving portion 20-1, a second receiving portion 20-2, and a third receiving portion 20-3. In this example, the first, second and third receiving portions further have respective longitudinal slots for receiving a corresponding pin disposed on an outer surface of a structural member when inserted into the receiving portion during assembly of the modular ladder (as described in detail below). The joint 20 also has a "T-shaped" configuration in a manner similar to housing 16b, with joint 20 and housing 16b being mutually sized and shaped to fit onto one another. Merely by way of example, the joint 20 may have an inner diameter of about 28 mm, or another diameter greater than or less than 28 mm.

Figure 8b illustrates joint 20, with a first collar 12a and associated first quick-release buckle 14a mounted on its first receiving portion 20-1, a second collar 12b and associated second quick-release buckle 14b mounted on its second receiving portion 20-2, and a third collar 12a and associated third quick-release buckle 14a mounted on its third receiving portion 20-1. As illustrated, the longitudinal slot at each receiving portion is mutually aligned with a respective longitudinal slit of each respective collar 12a, 12b, 12c. This mutual alignment may be facilitated by use of a detent mechanism (not illustrated), or by use of another suitable alignment means. The respective quick-release buckles 14a, 14b, 14c (specifically, the gap between the first and second securing portions 14-5, 14-7) are also aligned with the longitudinal slot at each receiving portion and the respective longitudinal slit of each collar 12a, 12b, 12c.

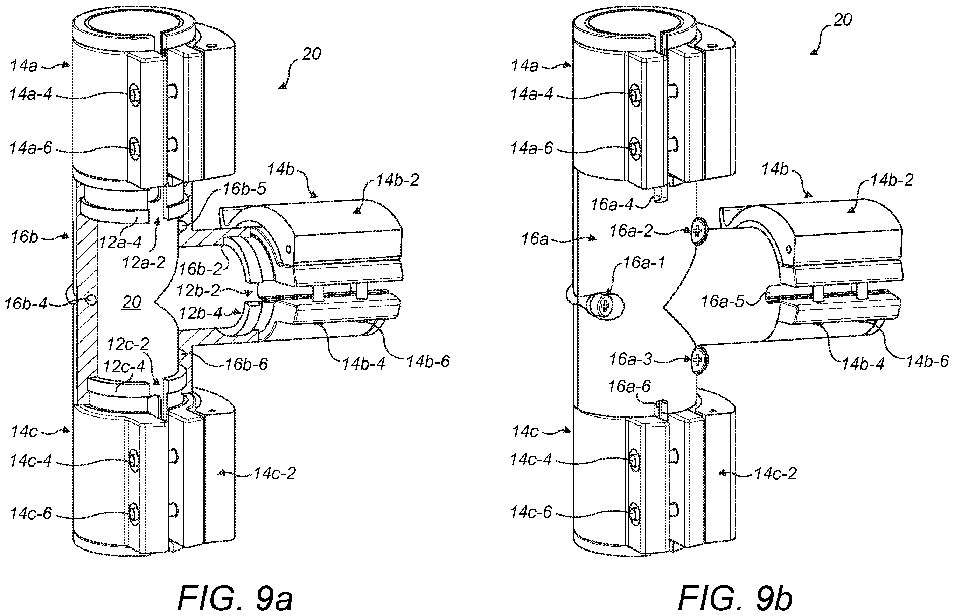

Reference is now made to Figures 9a and 9b which illustrate how a housing may be attached to the joint 20.

As shown in Figure 9a, a first half of the housing 16b is fitted to joint 20, and secures the collars 12a, 12b, 12c in place by mating the annular recessed portions or grooves 16b-1, 16b-2, and 16b-3 (illustrated more clearly in Figure 7c) with the corresponding respective annular portions 12a-4, 12b-4, 12c-4 of each collar 12a, 12b, 12c. Then, the second half of the housing 16a is fitted onto the first half of the housing 16b, as illustrated in Figure 9b. Fasteners 16a-1, 16a-2, 16a-3 may then be fastened into the openings 16b-4, 16b-5, 16b-6 on the opposingly facing first housing 16b. Whist in the illustrated example three screws are shown for fastening both halves of the housing 16a, 16b together, it will be appreciated that less than three or more than three fasteners may be used (or, instead, the housing may be glued/welded together).

With further reference to Figure 9b, it will be appreciated that each quick-release buckle 14a, 14b, 14c is mounted and constrained between the annular rim 12-6 of the collar 12 and the end of the housing 16 proximal to the quick-release buckle 14a, 14b, 14c.

In this example, a plurality of the assembled joints shown in Figure 9b are provided to the user as part of a kit for forming a modular ladder. (The component-level drawings shown in Figures 7a to 9a are to illustrate the manufacture of each joint shown in Figure 9b).

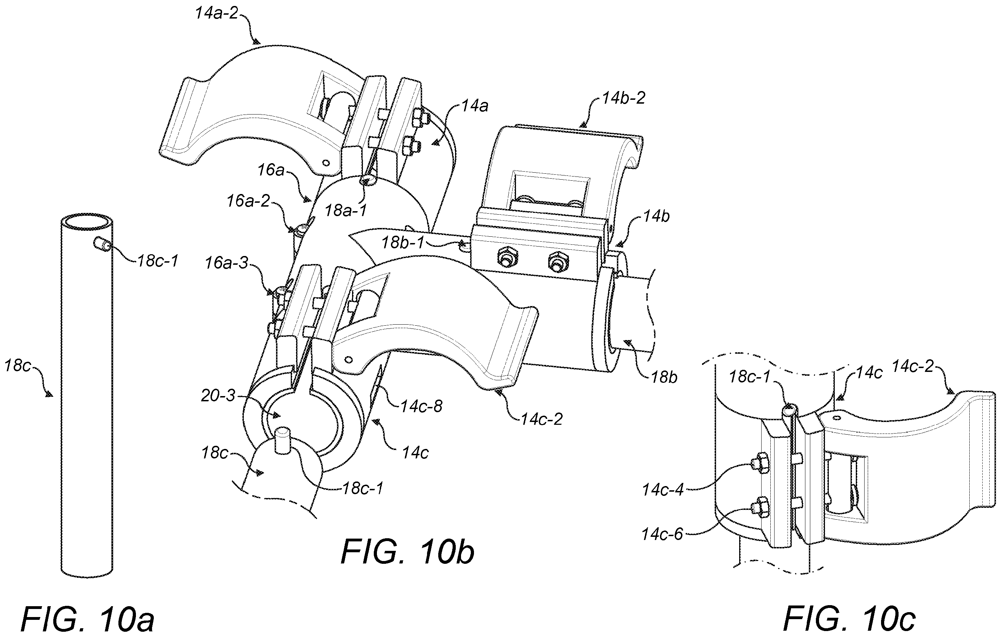

Reference is now made to Figures 10a, 10b and 10c which illustrate part of the procedure for forming a modular ladder using the joint of Figure 9b, and further features of the present twist-lock mechanism.

Figure 10a illustrates a structural member 18c having a pin 18a-1 on its outer surface and which is located at one end of the structural member 18c (the other end of the structural member may also comprise a corresponding pin, which is not shown in the illustrated example). Whilst pin 18c-1 is illustrated as being substantially cylindrical, this need not necessarily be the case. For example, the pin 18c-1 may instead have a triangular, square, or other n-sided cross-sectional configuration, or any other shape that enables it to provide a locating/locking function as described below. The structural member 18 may be drilled, with the pin being inserted and welded into place. The structural member may have an outer diameter of about 28 mm, or an outer diameter greater than or less than 28 mm.

During assembly of a modular ladder, a plurality of structural members 18 are used with a plurality of joints of the joint illustrated in Figure 9a to form a modular ladder of appropriate size.

Figure 10b shows the joint illustrated in Figure 9b, with the handle 14a-2, 14b-2, 14c-2 of each quick-release buckle 14a, 14b, 14c in the "open" position. In this position, structural members 18 may be inserted into the j oint. For instance, and as illustrated, structural member 18c, and its associated pin 18c-1, are offered up to the receiving portion 20-3 of the joint located at quick-release buckle 14c. The pin 18c-1 travels via the longitudinal slot formed in the receiving portion 20-3, and via the mutually aligned slit formed in the collar 12c. The quick-release buckle 14 is also mutually aligned with the longitudinal slot and the longitudinal slit to permit entry of the pin 18c-1 into the joint, between the opposing securing portions 14c-5, 14c-7 of the quick-release buckle 14c. An aperture 14c-8 formed through quick-release buckle 14c is also illustrated, and its use will be described in more detail later.

Figure 10c shows the location of the pin 18c-1 when fully inserted into the joint. As illustrated, the pin 18c-1 comes to rest against the housing 16, in a correspondingly shaped recess (shown at 16a-4, 16a-5, 16a-6 in Figure 9b) of the housing 16 which is aligned with the longitudinal slot 20-1 (preferably, but not necessarily, at the end of the longitudinal slot 20-1), thereby entrapping the pin 18c-1 within the joint once handle 14c-2 is closed. Beneficially, therefore, the joint according to the present example securely affixes the structural members when assembling the modular ladder.

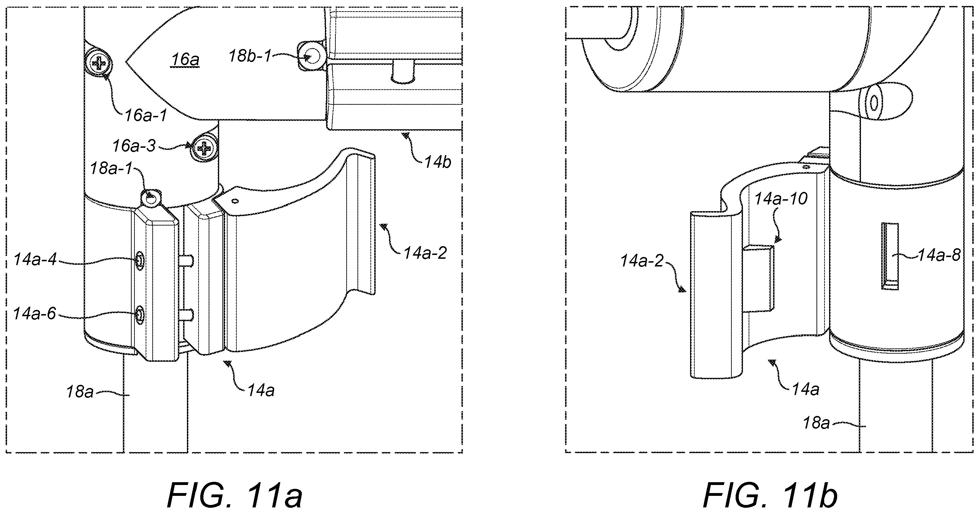

To affix the structural members 18 within the joint to an even greater extent than described above, in the illustrated example each quick-release buckle 14a, 14b, 14c is rotatable about its respective collar 12a, 12b, 12c (and its respective axis) to lock the pin 18-1 of the structural member 18 in place in use. For instance, with reference to Figure 11a, a user may rotate (e.g. by about 20 degrees) the quick-release buckle 14a around the collar 12a such that the pin 18a-1 is no longer aligned with the opening between the securing portions of the quick-release buckle 14a, but rather is now entrapped within the recess 16a-4 formed in housing 16 by the quick-release buckle 14a. The degree of rotation of the quick-release buckle 14 about the collar 12 may be governed by an integral detent mechanism or a "stop" (not illustrated). To entrap and lock pin 18a-1 within the joint, the securing portions 14-5, 14-7 of the quick-release buckle 14a may have a surface which defines a shoulder against which the pin 18a-1 of the structural member 18a abuts when quick-release buckle 14a is rotated into a "locked" position, as illustrated in Figure 11a.

In the illustrated example, once the quick-release collar 14 has been rotated and placed into the "locked" position, the aperture or recess of the collar 12a (shown at 12-8 in Figure 7a) is aligned with the aperture 14a-8 formed through the surface of the quick-release buckle 14. Moreover, in the illustrated example, the handle 14a-2 of the quick release buckle 14a comprises a tab or protrusion 14a-10 which is configured to engage with the aperture or recess 12-8 and the aperture 14a-8 (which mutually align with one another once the quick-release buckle 14a has been rotated into the locked position) when the handle 14a-2 is brought into the closed position, thereby securing the structural member 18 into the joint and entrapping the pin, and preventing or significantly reducing the risk of inadvertent disassembly of the joint.

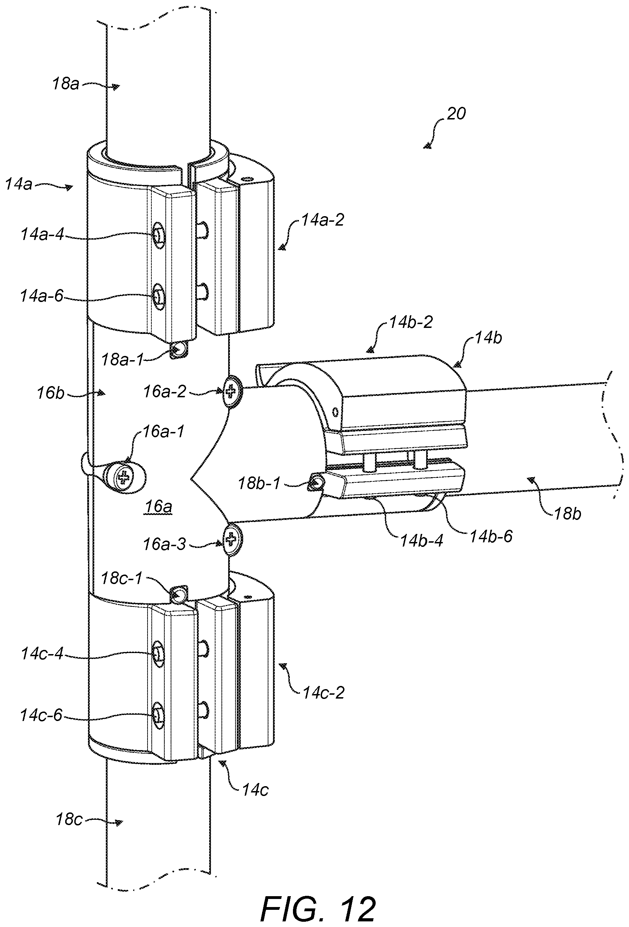

This procedure of inserting structural members 18 into their respective receiving portions, rotating their respective quick-release buckles 14, and closing the handle 14-2 of each buckle is repeated until a modular ladder is built. For instance, Figure 12 illustrates three structural members 18a, 18b, 18c having been inserted into the joint 20, with each structural member 18a, 18b, 18c being secured by entrapping the respective pin 18a-1, 18b-1, 18c-1 of the structural member 18a, 18b, 18c between the housing 16 and the respective securing portion (shoulder) of the quick-release buckle 14a, 14b, 14c before closing the respective handle 14a-2, 14b-2, 14c-2. The collar 12 aids in distributing the locking force evenly across the shaft of the structural member 18 via its deformation from the open to the closed position, thereby improving the grip of the securing means on the structural member 18.

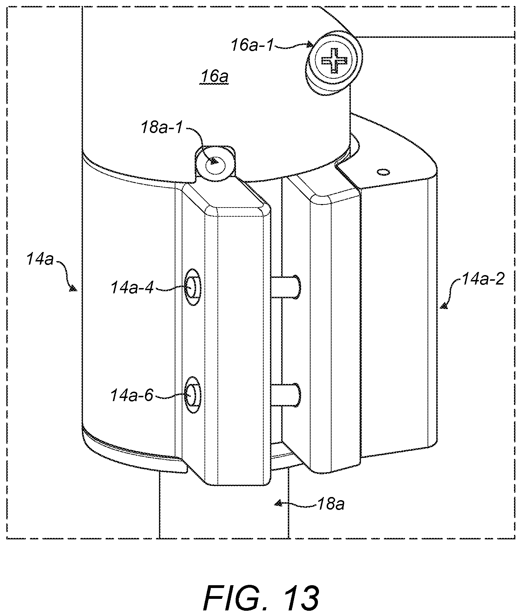

Figure 13 illustrates, in close up, a shoulder of the securing portion of the quick-release buckle 14a entrapping the pin 18a-1 of the structural member 18 between itself and the housing 16 when the quick-release buckle 14a is rotated into its locking position. The handle 14a-2 is illustrated in the closed position, thereby securing the member 18a into the joint.

It will be appreciated that the modular ladder may be disassembled by following the reverse procedure to that described above, i.e. by opening the handles 14-2, rotating the quick-release buckle 14, and removing the structural member 18 from the joint 20.

### Modifications and Alternatives

Detailed examples have been described above. As those skilled in the art will appreciate, a number of modifications and alternatives can be made to the above examples whilst still benefiting from the inventions embodied therein.

According to one alternative, rungs 3 and stiles 5 of the above-described ladders 2 may comprise, along at least part of their length, a textured surface portion (e.g. a portion which is knurled, roughened, rubberised, or the like) to aid grip e.g. when a user steps onto a rung 3 or grips a stile 5.

In a case where joint 7 is not integrally formed, longer continuous lengths of stile 5 may be used instead of the individual stiles 5 described above. Beneficially, therefore, fewer components may be associated with the modular ladder according to this example, and hence more rapidly assembled.

In the example described above with reference to Figures 7a to 13, the flexible collar 12 was provided as part of the disclosed twist-lock mechanism. However, in an alternative example, the collar 12 is instead inserted into a quick-release buckle 11 of the type shown in Figure 2c, without a twist-lock mechanism, to provide enhanced grip to a structural member inserted and secured therein.

In the example described above with reference to Figures 7a to 13, the housing 16 was provided as part of the joint 20. However, it will be appreciated that alternative examples may be realised in which the housing 16 is not present. For example, the joint substantially as shown in Figure 8b may be used, with the collars 12 held in place by other means.

Various other modifications will be apparent to those skilled in the art and will not be described in further detail here.

## Claims

1. A joint (7) for connecting structural members to form a modular ladder (2), the joint (7) comprising first, second and third receiving portions (9-1, 9-2, 9-3), wherein:
the first and third receiving portions (9-1, 9-3) project along a first axis;
the second receiving portion (9-2) projects along a second axis perpendicular to the first axis;
the first receiving portion (9-1) comprises a first void for receiving a first structural member (5-1), and a first securing means (11-1) for securing the first structural member (5-1) in the first void;
the second receiving portion (9-2) comprises a second void for receiving a second structural member (5-2), and a second securing means (11-2) for securing the second structural member (5-2) in the second void; and
the third receiving portion (9-3) comprises a third void for receiving a third structural member (5-3), and a third securing means (11-3) for securing the third structural member (5-3) in the third void,
wherein each securing means comprises a quick-release buckle (14); and
chracterized in that
each securing means further comprises a deformable collar (12) interposed between the quick-release buckle (14) and its respective receiving portion.

2. The joint according to claim 1, wherein each of the first, second and third receiving portions (9-1, 9-2, 9-3) are integrally formed within the joint (7).

3. The joint according to claim 1 or claim 2, wherein the second receiving portion (9-2) extends between the first and third receiving portions (9-1, 9-3).

4. The joint according to any preceding claim, wherein each receiving portion (9) comprises at least one notch (8) formed about its periphery, to allow compression of the receiving portion (9) upon fastening of the respective securing means (11).

5. The joint according to any preceding claim, wherein each receiving portion (9) comprises at least one longitudinal internal surface protrusion or recess formed along each respective void.

6. The joint according to any preceding claim, wherein each quick-release buckle (14) comprises:
a first securing portion (14-5);
a second securing portion (14-7); and
a fastener (14-4, 14-6) having a handle (14-2), the fastener (14-4, 14-6) fastening the first and second securing portions (14-5, 14-7) together;
wherein the handle (14-2) is movable between first and second positions;
wherein when the handle (14-2) is in the first position the first and second securing portions (14-5, 14-7) are spaced apart; and
wherein when the handle (14-2) is in the second position the first and second securing portions (14-5, 14-7) are brought together.

7. The joint according to claim 6, wherein the collar (12) comprises a first aperture or recess (12-8), wherein the handle (14-2) of the quick-release buckle (14) further comprises a protrusion (14a-10) and a second aperture (14a-8), and wherein the protrusion (14a-10) is configured to engage with the first aperture or recess (12-8) and the second aperture (14a-8) when the handle (14-2) is in the second position.

8. The joint according to any preceding claim, wherein the collar (12) further comprises an annular rim (12-6) against which the quick-release buckle (14) abuts.

9. The joint according to any of claims 1 to 3 or 5 to 8, wherein the first, second and third receiving portions further comprise a respective longitudinal slot (20-1, 20-2, 20-3) for receiving a corresponding pin (18a-1, 18b-1, 18c-1) on the outer surface of a structural member (18a, 18b, 18c) in use;
optionally wherein each quick-release buckle (14) is rotatable about its respective axis to lock the pin (18a-1, 18b-1, 18c-1) of the structural member (18a, 18b, 18c) in use;
and optionally wherein the first and/or second securing portions (14-5, 14-7) of the quick-release buckle (14) comprise a surface defining a shoulder against which the pin (18a-1, 18b-1, 18c-1) of the structural member (18a, 18b, 18c) is entrapped when quick-release buckle (14) is rotated in use.

10. The joint according to claim 9, wherein the deformable collar (12) comprises a longitudinal slit (12-2) through which the pin (18a-1, 18b-1, 18c-1) on the outer surface of the structural member (18a, 18b, 18c) can pass.

11. The joint according to claim 1 or any of claims 7 to 10, wherein the joint (7) further comprises a housing (16) for securing the respective collars (12) to the joint (7).

12. The joint of claim 11 when dependent on claims 9 or 10, wherein the housing (16) further comprises a recess (16a-4, 16a-5, 16a-6) aligned with the longitudinal slot (20-1, 20-2, 20-3), into which recess the pin (18a-1, 18b-1, 18c-1) of the structural member (18a, 18b, 18c) is entrapped in use.

13. The joint according to any of claims 1 to 9, wherein the securing means are affixed to the receiving portions with adhesive, by spot-welding, or by an interference fit; or
wherein each receiving portion comprises a recessed shoulder portion for receiving the respective securing means; or
wherein the joint is formed from a corrosion resistant rigid material.

14. A kit for forming a modular ladder (2), the kit comprising:
a plurality of structural members (18a, 18b, 18c); and
a plurality of joints (7) according to any preceding claim;
optionally wherein each structural member (18a, 18b, 18c) comprises a pin (18a-1, 18b-1, 18c-1) for guiding the structural member (18a, 18b, 18c) into a respective receiving portion.

15. A modular ladder (2) comprising a plurality of structural members (18a, 18b, 18c) connected by a plurality of joints (7) according to any of claims 1 to 13, or formed from the kit of claim 14.

## Patentansprüche

1. Verbindung (7) zum Verbinden von Strukturelementen zum Bilden einer modularen Leiter (2), wobei die Verbindung (7) einen ersten, einen zweiten und einen dritten Aufnahmeabschnitt (9-1, 9-2, 9-3) umfasst, wobei:
sich der erste und der dritte Aufnahmeabschnitt (9-1, 9-3) entlang einer ersten Achse erstrecken;
sich der zweite Aufnahmeabschnitt (9-2) entlang einer zweiten Achse erstreckt, die senkrecht zu der ersten Achse steht;
der erste Aufnahmeabschnitt (9-1) einen ersten Hohlraum zum Aufnehmen eines ersten Strukturelements (5-1) und ein erstes Sicherungsmittel (11-1) zum Sichern des ersten Strukturelements (5-1) in dem ersten Hohlraum umfasst;
der zweite Aufnahmeabschnitt (9-2) einen zweiten Hohlraum zum Aufnehmen eines zweiten Strukturelements (5-2) und ein zweites Sicherungsmittel (11-2) zum Sichern des zweiten Strukturelements (5-2) in dem zweiten Hohlraum umfasst; und
der dritte Aufnahmeabschnitt (9-3) einen dritten Hohlraum zum Aufnehmen eines dritten Strukturelements (5-3) und ein drittes Sicherungsmittel (11-3) zum Sichern des dritten Strukturelements (5-3) in dem dritten Hohlraum umfasst,
wobei jedes Sicherungsmittel eine Schnellverschluss-Schnalle (14) umfasst; und
**dadurch gekennzeichnet, dass** jedes Sicherungsmittel ferner einen verformbaren Bund (12) umfasst, der zwischen der Schnellverschluss-Schnalle (14) und ihren jeweiligen Aufnahmeabschnitten eingefügt ist.

2. Verbindung nach Anspruch 1, wobei jeder des ersten, zweiten und dritten Aufnahmeabschnitts (9-1, 9-2, 9-3) integral mit der Verbindung (7) gebildet ist.

3. Verbindung nach Anspruch 1 oder Anspruch 2, wobei sich der zweite Aufnahmeabschnitt (9-2) zwischen dem ersten und dem dritten Aufnahmeabschnitt (9-1, 9-3) erstreckt.

4. Verbindung nach einem vorstehenden Anspruch, wobei jeder Aufnahmeabschnitt (9) mindestens eine Kerbe (8) umfasst, die um seinen Umfang gebildet ist, um Kompression des Aufnahmeabschnitts (9) beim Anziehen der jeweiligen Sicherungsmittel (11) zu erlauben.

5. Verbindung nach einem vorstehenden Anspruch, wobei jeder Aufnahmeabschnitt (9) mindestens einen länglichen Vorsprung oder eine längliche Vertiefung an einer Innenfläche umfasst, der/die entlang des jeweiligen Hohlraums ausgebildet ist/sind.

6. Verbindung nach einem vorstehenden Anspruch, wobei jede Schnellverschluss-Schnalle (14) Folgendes umfasst:
einen ersten Sicherungsabschnitt (14-5);
einen zweiten Sicherungsabschnitt (14-7); und
ein Befestigungselement (14-4, 14-6), das einen Griff (14-2) aufweist, wobei das Befestigungselement (14-4, 14-6) den ersten und den zweiten Sicherungsabschnitt (14-5, 14-7) aneinander befestigt;
wobei der Griff (14-2) zwischen einer ersten und einer zweiten Position bewegbar ist;
wobei, wenn der Griff (14-2) in der ersten Position ist, der erste und der zweite Sicherungsabschnitt (14-5, 14-7) beabstandet sind; und
wobei, wenn der Griff (14-2) in der zweiten Position ist, der erste und der zweite Sicherungsabschnitt (14-5, 14-7) zusammengebracht werden.

7. Verbindung nach Anspruch 6, wobei der Bund (12) eine erste Öffnung oder Vertiefung (12-8) umfasst, wobei der Griff (14-2) der Schnellverschluss-Schnalle (14) ferner einen Vorsprung (14a-10) und eine zweite Öffnung (14a-8) umfasst, und wobei der Vorsprung (14a-10) dazu konfiguriert ist, mit der ersten Öffnung oder Vertiefung (12-8) und der zweiten Öffnung (14a-8) in Eingriff zu gelangen, wenn der Griff (14-2) in der zweiten Position ist.

8. Verbindung nach einem vorstehenden Anspruch, wobei der Bund (12) ferner einen ringförmigen Rand (12-6) umfasst, gegen den die Schnellverschluss-Schnalle (14) anliegt.

9. Verbindung nach einem der Ansprüche 1 bis 3 oder 5 bis 8, wobei der erste, zweite und dritte Aufnahmeabschnitt ferner einen jeweiligen Längsschlitz (20-1, 20-2, 20-3) zum Aufnehmen eines entsprechenden Stifts (18a-1, 18b-1, 18c-1) an der äußeren Oberfläche eines Strukturelements (18a, 18b, 18c) bei Verwendung umfasst;
wobei optional jede Schnellverschluss-Schnalle (14) um ihre jeweilige Achse drehbar ist, um den Stift (18a-1, 18b-1, 18c-1) des Strukturelements (18a, 18b, 18c) bei Verwendung zu verriegeln;
und wobei optional der erste und/oder zweite Sicherungsabschnitt (14-5, 14-7) der Schnellverschluss-Schnalle (14) eine Oberfläche umfasst, die eine Schulter definiert, gegen die der Stift (18a-1, 18b-1, 18c-1) des Strukturelements (18a, 18b, 18c) gefangen wird, wenn die Schnellverschluss-Schnalle (14) bei Verwendung gedreht wird.

10. Verbindung nach Anspruch 9, wobei der verformbare Bund (12) einen Längsschlitz (12-2) umfasst, durch den der Stift (18a-1, 18b-1, 18c-1) an der äußeren Oberfläche des Strukturelements (18a, 18b, 18c) durchgehen kann.

11. Verbindung nach Anspruch 1 oder einem der Ansprüche 7 bis 10, wobei die Verbindung (7) ferner ein Gehäuse (16) zum Sichern der jeweiligen Bünde (12) an der Verbindung (7) umfasst.

12. Verbindung nach Anspruch 11, wenn abhängig von den Ansprüchen 9 oder 10, wobei das Gehäuse (16) ferner eine Vertiefung (16a-4, 16a-5, 16a-6) umfasst, die mit dem Längsschlitz (20-1, 20-2, 20-3) ausgerichtet ist, wobei der Stift (18a-1, 18b-1, 18c-1) des Strukturelements (18a, 18b, 18c) bei Verwendung in der Vertiefung gefangen ist.

13. Verbindung nach einem der Ansprüche 1 bis 9, wobei die Sicherungsmittel an den Aufnahmeabschnitten mit Klebstoff, durch Punktschweißen oder durch Reibpassung angebracht sind; oder
wobei jeder Aufnahmeabschnitt einen vertieften Schulterabschnitt zum Aufnehmen der jeweiligen Sicherungsmittel umfasst; oder
wobei die Dichtung aus einem korrosionsbeständigen starren Material gebildet ist.

14. Bausatz zum Bilden einer modularen Leiter (2), wobei der Bausatz Folgendes umfasst:
eine Vielzahl von Strukturelementen (18a, 18b, 18c); und
eine Vielzahl von Verbindungen (7) nach einem vorstehenden Anspruch;
wobei das Strukturelement (18a, 18b, 18c) optional einen Stift (18a-1, 18b-1, 18c-1) zum Führen des Strukturelements (18a, 18b, 18c) in einen jeweiligen Aufnahmeabschnitt umfasst.

15. Modulare Leiter (2), die eine Vielzahl von Strukturelementen (18a, 18b, 18c) umfasst, die durch eine Vielzahl von Verbindungen (7) nach einem der Ansprüche 1 bis 13 verbunden sind oder aus dem Bausatz des Anspruchs 14 gebildet sind.

## Revendications

1. Raccord (7) destiné à relier des éléments structurels afin de former une échelle modulaire (2), le raccord (7) comprenant des première, deuxième et troisième parties de réception (9-1, 9-2, 9-3), où :
les première et troisième parties de réception (9-1, 9-3) font saillie le long d'un premier axe ;
la deuxième partie de réception (9-2) fait saillie le long d'un second axe perpendiculaire au premier axe ;
la première partie de réception (9-1) comprend une première cavité destinée à recevoir un premier élément structurel (5-1), et un premier moyen de fixation (11-1) destiné à fixer le premier élément structurel (5-1) dans la première cavité ;
la deuxième partie de réception (9-2) comprend une deuxième cavité destinée à recevoir un deuxième élément structurel (5-2), et un deuxième moyen de fixation (11-2) destiné à fixer le deuxième élément structurel (5-2) dans la deuxième cavité ; et
la troisième partie de réception (9-3) comprend une troisième cavité destinée à recevoir un troisième élément structurel (5-3), et un troisième moyen de fixation (11-3) destiné à fixer le troisième élément structurel (5-3) dans la troisième cavité,
chaque moyen de fixation comprenant une boucle à déclenchement rapide (14) ; et
**caractérisé en ce que** chaque moyen de fixation comprend, en outre, un manchon déformable (12) interposé entre la boucle à déclenchement rapide (14) et sa partie de réception respective.

2. Raccord selon la revendication 1, dans lequel chacune des première, deuxième et troisième parties de réception (9-1, 9-2, 9-3) fait partie intégrante du raccord (7).

3. Raccord selon la revendication 1 ou la revendication 2, dans lequel la deuxième partie de réception (9-2) s'étend entre les première et troisième parties de réception (9-1, 9-3).

4. Raccord selon l'une quelconque des revendications précédentes, dans lequel chaque partie de réception (9) comprend au moins une encoche (8) formée autour de sa périphérie, pour permettre une compression de la partie de réception (9) lorsque le moyen de fixation (11) respectif est attaché.

5. Raccord selon l'une quelconque des revendications précédentes, dans lequel chaque partie de réception (9) comprend au moins une saillie ou un renfoncement de surface intérieure longitudinal formé le long de chaque cavité respective.

6. Raccord selon l'une quelconque des revendications précédentes, dans lequel chaque boucle à déclenchement rapide (14) comprend :
une première partie de fixation (14-5) ;
une seconde partie de fixation (14-7) ; et
une attache (14-4, 14-6) comportant une poignée (14-2), l'attache (14-4, 14-6) attachant ensemble les première et seconde parties de fixation (14-5, 14-7) ;
dans lequel la poignée (14-2) est mobile entre des première et seconde positions ;
dans lequel, lorsque la poignée (14-2) est dans la première position, les première et seconde parties de fixation (14-5, 14-7) sont écartées ; et
dans lequel, lorsque la poignée (14-2) est dans la seconde position, les première et seconde parties de fixation (14-5, 14-7) sont rapprochées.

7. Raccord selon la revendication 6, dans lequel le manchon (12) comprend une première ouverture ou un premier renfoncement (12-8), dans lequel la poignée (14-2) de la boucle à déclenchement rapide (14) comprend, en outre, une saillie (14a-10) et une seconde ouverture (14a-8), et dans lequel la saillie (14a-10) est conçue pour s'accoupler avec la première ouverture ou le premier renfoncement (12-8) et la seconde ouverture (14a-8) lorsque la poignée (14-2) est dans la seconde position.

8. Raccord selon l'une quelconque des revendications précédentes, dans lequel le manchon (12) comprend, en outre, une collerette annulaire (12-6) contre laquelle la boucle à déclenchement rapide (14) vient en appui.

9. Raccord selon l'une quelconque des revendications 1 à 3 ou 5 à 8, dans lequel les première, deuxième et troisième parties de réception comprennent, en outre, une fente longitudinale (20-1, 20-2, 20-3) respective destinée à recevoir un ergot (18a-1, 18b-1, 18c-1) correspondant sur la surface extérieure d'un élément structurel (18a, 18b, 18c) durant l'utilisation ;
éventuellement, dans lequel chaque boucle à déclenchement rapide (14) est rotative autour de son axe respectif afin de bloquer l'ergot (18a-1, 18b-1, 18c-1) de l'élément structurel (18a, 18b, 18c) durant l'utilisation ;
et, éventuellement, dans lequel les première et/ou seconde parties de fixation (14-5, 14-7) de la boucle à déclenchement rapide (14) comprennent une surface définissant un épaulement contre lequel l'ergot (18a-1, 18b-1, 18c-1) de l'élément structurel (18a, 18b, 18c) est pris au piège lorsqu'une rotation est appliquée à la boucle à déclenchement rapide (14) durant l'utilisation.

10. Raccord selon la revendication 9, dans lequel le manchon déformable (12) comprend une rainure longitudinale (12-2) à travers laquelle l'ergot (18a-1, 18b-1, 18c-1) sur la surface extérieure de l'élément structurel (18a, 18b, 18c) peut passer.

11. Raccord selon la revendication 1 ou l'une quelconque des revendications 7 à 10, le raccord (7) comprenant, en outre, un boîtier (16) destiné à fixer les manchons (12) respectifs au raccord (7).

12. Raccord selon la revendication 11 lorsqu'elle dépend de la revendication 9 ou 10, dans lequel le boîtier (16) comprend, en outre, un renfoncement (16a-4, 16a-5, 16a-6) aligné avec la fente longitudinale (20-1, 20-2, 20-3), l'ergot (18a-1, 18b-1, 18c-1) de l'élément structurel (18a, 18b, 18c) étant pris au piège dans ledit renfoncement durant l'utilisation.

13. Raccord selon l'une quelconque des revendications 1 à 9, dans lequel les moyens de fixation sont assujettis aux parties de réception au moyen d'un adhésif, par soudage par points, ou par ajustement avec serrage ; ou
dans lequel chaque partie de réception comprend une partie formant épaulement en renfoncement destinée à recevoir le moyen de fixation respectif ; ou
le raccord étant composé d'un matériau rigide résistant à la corrosion.

14. Kit pour former une échelle modulaire (2), le kit comprenant :
une pluralité d'éléments structurels (18a, 18b, 18c) ; et
une pluralité de raccords (7) selon l'une quelconque des revendications précédentes ;
éventuellement, dans lequel chaque élément structurel (18a, 18b, 18c) comprend un ergot (18a-1, 18b-1, 18c-1) destiné à guider l'élément structurel (18a, 18b, 18c) lorsqu'il pénètre dans une partie de réception respective.

15. Échelle modulaire (2) comprenant une pluralité d'éléments structurels (18a, 18b, 18c) reliés par une pluralité de raccords (7) selon l'une quelconque des revendications 1 à 13, ou formée à partir du kit selon la revendication 14.
